# EUROPÄISCHE PATENTSCHRIFT

(11) **EP 1 560 644 B1**
(45) Veröffentlichungstag und Bekanntmachung des Hinweises auf die Patenterteilung: **18.03.2009**
(21) Anmeldenummer: 03769195.3
(22) Anmeldetag: 16.09.2003
(51) Int. Cl.: B01J 4/02

(54) **DOSIEREINRICHTUNG**
DOSING DEVICE
DISPOSITIF DE DOSAGE

(30) Priorität: 06.11.2002 DE 10251697
(43) Veröffentlichungstag der Anmeldung: 10.08.2005
(73) Patentinhaber: ROBERT BOSCH GMBH, 70442 Stuttgart (DE)
(72) Erfinder: MILLER, Frank, 74360 Ilsfeld (DE); ALBRODT, Hartmut, 71732 Tamm (DE)
(74) Vertreter: Körfer, Thomas
(86) Internationale Anmeldenummer: PCT/DE2003/003071
(87) Internationale Veröffentlichungsnummer: WO 2004/041423

(56) Entgegenhaltungen:
- WO-A-02/059477
- WO-A-03/068408
- CH-A- 646 619
- US-A- 6 161 782

## Beschreibung

### Stand der Technik

Die Erfindung geht aus von einer Dosiereinrichtung nach der Gattung des Hauptanspruchs.

Bei brennstoffzellengestützten Transportsystemen kommen zur Gewinnung des benötigten Wasserstoffs aus kohlenwasserstoffhaltigen Kraftstoffen wie beispielsweise Benzin, Ethanol oder Methanol sog. chemische Reformer zum Einsatz. Zur Wärmeerzeugung, insbesondere in Kaltstartphasen, kommen katalytische Brenner und Nachbrenneinrichtungen zum Einsatz.

Alle vom Reformer zum Reaktionsablauf benötigten Stoffe, wie z.B. Luft, Wasser und Kraftstoff, werden dem Reaktionsbereich idealerweise in gasförmigem oder zumindest zerstäubtem Zustand zugeführt. Da aber die Kraftstoffe, wie z.B. Methanol oder Benzin, und Wasser, an Bord des Transportsystems vorzugsweise in flüssiger Form vorliegen, müssen sie erst, kurz bevor sie zum Reaktionsbereich des Reformers gelangen, aufbereitet werden. Dies erfordert beispielsweise eine Dosiereinrichtung, welche in der Lage ist, die entsprechenden Mengen Kraftstoff oder anderer Stoffe fein zerstäubt zur Verfügung zu stellen.

Die für die chemische Reaktion, in welcher beispielsweise der Kraftstoff unter anderem zu Wasserstoff reformiert wird, notwendige Temperatur wird durch sogenannte Katbrenner oder Nachbrenneinrichtung zur Verfügung gestellt. Katbrenner sind Komponenten, welche mit einem Katalysator beschichtete Flächen aufweisen. In diesen katalytischen Brennern wird das Kraftstoff/Luftgemisch in Wärme und Abgase gewandelt, wobei die entstehende Wärme beispielsweise über die Mantelflächen und/oder über den warmen Abgasstrom an die entsprechenden Komponenten, wie beispielsweise den chemischen Reformer oder einen Verdampfer, geführt wird.

Die Umsetzung des Kraftstoffs in Wärme ist stark von der Größe der Kraftstofftröpfchen, welche auf die katalytische Schicht auftreffen, abhängig. Je kleiner die Tröpfchengröße ist und je gleichmäßiger die katalytische Schicht mit den Kraftstofftröpfchen benetzt wird, desto vollständiger wird der Kraftstoff in Wärme gewandelt und desto höher ist der Wirkungsgrad. Der Kraftstoff wird so zudem schneller umgesetzt und Schadstoffemissionen gemindert. Zu große Kraftstofftröpfchen führen zu einer Belegung der katalytischen Schicht und damit zu einer nur langsamen Umsetzung. Dieses führt insbesondere in der Kaltstartphase beispielsweise zu einem schlechten Wirkungsgrad.

Da der Wasserstoff zumeist sofort verbraucht wird, müssen die chemischen Reformer in der Lage sein, die Produktion von Wasserstoff verzögerungsfrei, z.B. bei Lastwechseln oder Startphasen, an die Nachfrage anzupassen. Insbesondere in der Kaltstartphase müssen zusätzliche Maßnahmen ergriffen werden, da der Reformer keine Abwärme bereitstellt. Konventionelle Verdampfer sind nicht in der Lage, die entsprechenden Mengen an gasförmigen Reaktanden verzögerungsfrei zu erzeugen.

Es ist daher sinnvoll, den Kraftstoff gut aufbereitet durch eine Dosiereinrichtung in feinverteilter Form und/oder gut platziert an Orte und Flächen zu verteilen, an denen die Kraftstoffe gut verdampfen können, beispielsweise in den Reaktionsraum oder die Vormischkammer eines Reformers oder katalytischen Brenners, die Innenflächen eines zylindrischen Brennraums oder die inneren Mantelflächen eines Katbrenners. Darüber hinaus ist es sinnvoll, die Kraftstoffwolke hinsichtlich ihrer geometrischen Form, ihrer Ausbreitungsgeschwindigkeit und Drallausbildung dem Brennraum und den darin vorherrschenden Bedingungen anpassen zu können.

Beispielsweise sind aus der US 3,971,847 Vorrichtungen zur Eindosierung von Kraftstoffen in Reformer bekannt. Der Kraftstoff wird hier von vom Reformer relativ weit entfernten Zumeßeinrichtungen über lange Zumeßleitungen und eine einfache Düse in einen temperierten Stoffstrom zugemessen. Dabei trifft der Kraftstoff zuerst auf Prallbleche, die nach der Austrittsöffnung der Düse angeordnet sind, welche eine Verwirbelung und Verteilung des Kraftstoffs bewirkten sollen, und gelangt dann über eine relativ lange Verdampfungsstrecke, welche für den Verdampfungsprozess notwendig ist, in den Reaktionsbereich des Reformers. Durch die lange Zumeßleitung kann die Zumeßeinrichtung von thermischen Einflüssen des Reformers isoliert werden.

Nachteilig bei den aus der obengenannten Druckschrift bekannten Vorrichtungen ist insbesondere, daß unterhalb der Betriebstemperatur des Reformers, beispielsweise in einer Kaltstartphase, die Zerstäubung des Kraftstoffes nur unzureichend erfolgt und die Dosiereinrichtung sehr aufwendig und raumverbrauchend aufgebaut ist. Durch die dabei entstehende relativ geringe Reaktionsfläche zwischen Kraftstoff und oxidant erfolgt die Verbrennung bzw. chemische Reaktion nur langsam und zumeist auch unvollständig. Der Wirkungsgrad sinkt dadurch deutlich und die Schadstoffemissionen steigen unvorteilhaft an. Unvollständige Verbrennung bzw. eine unvollständige chemische Reaktion führt meist zur Bildung von aggressiven chemischen Verbindungen, welche den chemischen Reformer bzw. die Nachbrenneinrichtung schädigen können und zu Ablagerungen, die die Funktion beeinträchtigen können. Die aufwendige und raumverbrauchende Konstruktion im Düsenbereich, wo die Zerstäubung erfolgt, führt zu hohen Herstellungs- und Betriebskosten, insbesondere infolge einer schlechteren Montagefreundlichkeit und höheren Fehleranfälligkeit.

Insbesondere lassen sich die Ausbreitungsgeschwindigkeit, die geometrische Form und die Drallausbildung der durch die Düse und die Prallbleche erzeugten Kraftstoffwolke nur sehr unzureichend beeinflussen.

In der US-A-6 161 782 wird eine Zerstäuberscheibe für Einspritzventile beschrieben. Die Zerstäuberscheibe besteht aus wenigstens einem metallischen Material, und weist einen vollständigen Durchgang für ein Fluid, wenigstens einer Einlassöffnung und wenigstens eine Auslassöffnung auf. Weiterhin weist die Zerstäuberscheibe wenigstens zwei Drallkanäle, die in eine Drallkammer münden, auf. Gebildet wird die Zerstäuberscheibe aus drei galvanisch aufeinander abgeschiedenen Schichten, die im eingebauten Zustand axial aufeinander folgen, und welche entsprechend ihrer Funktion als Deckelschicht, Drallerzeugungsschicht und Bodenschicht bezeichnet werden. Die obere Deckelschicht ist mit einem kleineren Außendurchmesser als die untere Schicht ausgebildet.

Die WO 02/059477 A offenbart ein Brennstoffeinspritzventil mit einem Ventilschließkörper, der mit einer Ventilnadel in Wirkverbindung steht und der mit einer in einer Ausnehmung eines Ventilsitzkörpers angeordneten Ventilsitzfläche zu einem Dichtsitz zusammenwirkt, und mit einer in dem Ventilsitzkörper angeordneten Abspritzöffnung. Zwischen der Ventilsitzfläche und der Abspritzöffnung wird durch die Ausnehmung eine zweite Fläche gebildet, die mit der Mittelachse des Brennstoffeinspritzventils einen spitzeren Winkel einschließt als die Ventilsitzfläche. An dem stromabwärtigen Ende des Ventilschließkörpers ist ein Schließkörperfortsatz angeordnet, dessen Mantelfläche mit der angrenzenden Kontur des Ventilschließkörpers einen stumpfen Winkel bildet.

### Vorteile der Erfindung

Die erfindungsgemäße Dosiereinrichtung mit den kennzeichnenden Merkmalen des Hauptanspruchs hat demgegenüber den Vorteil, daß die Zerstäubung und Verteilung des Kraftstoffes bzw. des Kraftstoff-Gas-Gemisches wesentlich verbessert wird. Insbesondere können die Ausbreitungsgeschwindigkeit, die Drallausbildung und die geometrische Form der Kraftstoffwolke bzw. der Kraftstoff-Gas-Gemischwolke im Brennraum bzw. Zumeßraum vorteilhaft bestimmt werden. Dadurch kann beispielsweise die Kaltstartphase wesentlich verkürzt werden und schon während der Kaltstartphase der Wirkungsgrad der Nachbrenneinrichtung bzw. des chemischen Reformers deutlich gesteigert werden. Die Schadstoffemissionen sind dabei wesentlich reduziert. Durch die erfindungsgemäße Dosiereinrichtung ist es weiterhin möglich, die Dosiereinrichtung sehr einfach, zuverlässig damit kostengünstig herzustellen. Außerdem können standardisierte serienmäßig gefertigte Bauteile verwenden werden.

Durch die in den Unteransprüchen aufgeführten Maßnahmen sind vorteilhafte Weiterbildungen der im Hauptanspruch angegebenen Dosiereinrichtung möglich.

In einer ersten Weiterbildung der erfindungsgemäßen Dosiereinrichtung weist der Düsenkörper ein stromaufwärtiges Zuführungsrohr und ein stromabwärtiges Trägerelement auf, wobei beide rohrförmig, insbesondere zylinderrohrförmig, sind und hydraulisch dicht durch Schweißen oder Laserschweißen miteinander verbunden sind. Dadurch lassen sich beide Teile leicht und damit kostengünstig herstellen und jeweils getrennt gemäß den jeweiligen Anforderung kostengünstig herstellen.

In einer weiteren vorteilhaften Weiterbildung ist der Dralleinsatz mit dem Trägerelement insbesondere durch Pressen, Schweißen oder Laserschweißen hydraulisch dicht gefügt. Dadurch lassen sich besonders feste, zuverlässige und kostengünstige Fügeverbindungen herstellen.

Wichtig ist, daß der Dralleinsatz ein zumindest eine Abspritzöffnung aufweisendes Sitzelement und ein Drallelement aufweist. Die Teile des Dralleinsatzes lassen sich so einfach und kostengünstig verschiedenen Belastungen und Bedingungen anpassen.

Vorteilhaft ist es außerdem, das Drallelement scheibenförmig auszuführen. Dadurch kann es insbesondere leicht bearbeitet werden. Darüber hinaus weist das Drallelement vorteilhafterweise eine durchgängige Öffnung auf, durch welche die Drallentwicklung und Drallausbildung vorteilhaft beeinflußt werden kann.

Weitergebildet werden kann die erfindungsgemäße Dosiereinrichtung außerdem, indem das Drallelement durch Schweißen oder Laserschweißen mit dem Sitzelement gefügt wird. Dadurch sind kostengünstige Herstellungsschritte und zuverlässige und feste Fügeverbindungen realisierbar.

Vorteilhaft ist es zudem, zwischen dem Drallelement und dem Sitzelement ein Zwischenelement anzuordnen. Dadurch kann das Drallelement vom Sitzelement beabstandet werden, um so die Dralleigenschaften vorteilhaft zu beeinflussen.

Vorteilhafterweise ist das Drallelement mit einem Abstand von der Wandung des Trägerelements angeordnet. Dadurch kann der Kraftstoffzufluß in das Drallelement ungehindert erfolgen und auch von der Seite der Wandung des Trägerelements erfolgen, um insbesondere die Drallbildung zu verstärken.

Vorteilhafterweise wird die Öffnung des Drallelements wenigstens teilweise mit einem Einsatz verschlossen. Die Dralleigenschaften lassen sich so weiter verbessern bzw. den jeweiligen Bedingungen und Anforderungen anpassen. Der Einsatz ist vorteilhafterweise zudem mit dem Drallelement durch Schweißen oder Laserschweißen verbunden.

Die Öffnung weist zudem eine Öffnungslängsachse auf, welche einen in Strömungsrichtung des Kraftstoffes bzw. des Kraftstoff-Gas-Gemisches liegenden Richtungsanteil aufweist.

Das Drallelement weist vorteilhafterweise zumindest einen Drallkanal auf, welcher zur Öffnungslängsachse einen radialen und tangentialen Richtungsanteil aufweist.

Vorteilhafterweise sind die Zumeßleitung und die Zumeßeinrichtung durch einen Adapter hydraulisch dicht und lösbar gefügt. Dadurch erhöht sich die Montagefreundlichkeit.

In einer weiteren Weiterbildung weist der die Zumeßleitung und die Zumeßeinrichtung verbindende Adapter eine Luftzuführung auf, wobei die Luftzuführung im Adapter mit der Zumeßleitung verbunden ist. Dadurch läßt sich bereits in der Zumeßleitung die Gemischaufbereitung einleiten, wobei der in die Zumeßleitung eingemessene Kraftstoff und/oder das eingemessene Gas mit Luft gemischt wird. Die Zerstäubung und Gemischbildung von Kraftstoff und/oder dem eingemessenen Gas mit Luft wird dadurch insgesamt verbessert. Darüber hinaus kann durch die Luftzuführung die Zumeßleitung von unerwünschten Kraftstoff- bzw. Gasresten befreit werden, indem diese beispielsweise mit Luft durch die Luftzuführung, vor beispielsweise einer Stop- oder Leerlaufphase, ausgeblasen werden. Dadurch läßt sich eine unkontrollierte Abgabe von Kraftstoff in den Zumeßraum oder die Umwelt verhindern.

Vorteilhafterweise wird als Zumeßeinrichtung ein Brennstoffeinspritzventil eingesetzt, wie es z.B. für Hubkolbenmaschinen mit innerer Verbrennung benutzt wird. Der Einsatz solcher Ventile hat mehrere Vorteile. So lassen sie eine besonders genaue Steuerung bzw. Regelung der Kraftstoffzumessung zu, wobei die Zumessung über mehrere Parameter, wie z.B. Tastverhältnis, Taktfrequenz und ggf. Hublänge, gesteuert werden kann. Dabei ist die Abhängigkeit vom Pumpendruck weit weniger ausgeprägt, als bei Zumeßeinrichtungen, die über den Leitungsquerschnitt den Volumenstrom des Kraftstoffs steuern und der Dosierbereich ist deutlich größer.

Darüber hinaus sind die Brennstoffeinspritzventile vielfach bewährte, in ihrem Verhalten bekannte, kostengünstige, gegenüber den verwendeten Kraftstoffen chemisch stabile und zuverlässige Bauteile, wobei dies im besonderen für sog. Niederdruck-Brennstoffeinspritzventile zutrifft, die aufgrund der thermischen Entkopplung durch die Zumeßleitung hier gut einsetzbar sind.

Die Zumeßleitung weist vorteilhafterweise eine Anzahl wandstärkereduzierter Stellen auf, die die Wärmeleitfähigkeit der Zumeßleitung herabsetzten bzw. auch als Kühlkörper dienen können.

Durch den mehrteiligen Aufbau der Dosiereinrichtung ist eine kostengünstige Herstellung und der Einsatz von standardisierten Bauteilen möglich.

### Zeichnung

Ausführungsbeispiele der Erfindung sind in der Zeichnung vereinfacht dargestellt und in der nachfolgenden Beschreibung näher erläutert. Es zeigen:
- Fig. 1: eine schematische Darstellung eines ersten Ausführungsbeispiels einer erfindungsgemäßen Dosiereinrichtung,
- Fig. 2: eine schematische Schnittdarstellung des Düsenkörpers des ersten Ausführungsbeispiels,
- Fig. 3: eine schematische Darstellung eines Drallelements des ersten Ausführungsbeispiels,
- Fig.4: eine schematische Schnittdarstellung des
- Düsenkörpers und erfindungsgemäßen
- Fig. 5: eine schematische Schnittdarstellung des Düsenkörpers eines dritten Ausführungsbeispiels.

### Beschreibung der Ausführungsbeispiele

Nachfolgend werden Ausführungsbeispiele der Erfindung beispielhaft beschrieben. Die gezeigten Ausführungsbeispiele der Dosiereinrichtung eignen sich insbesondere zur Dosierung und Aufbereitung von flüssigen Kraftstoffen und Luft in einen Hohlzylinder eines chemischen Reformers oder eine Nachbrenneinrichtung mit einem Sprühwinkel von weniger als 60°.

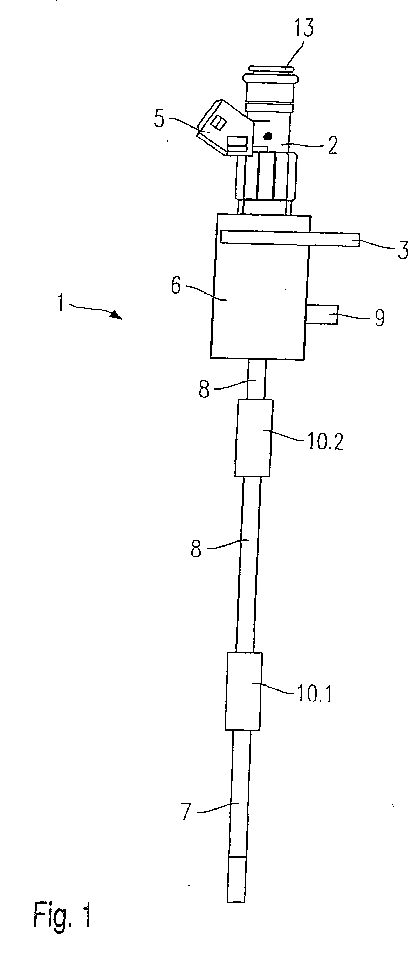

Ein in Fig. 1 dargestelltes Ausführungsbeispiel einer erfindungsgemäßen Dosiereinrichtung 1 ist in der Form einer Dosiereinrichtung 1 für die Verwendung von Niederdruck-Brennstoffeinspritzventilen ausgeführt. Die Dosiereinrichtung 1 eignet sich insbesondere zum Eintrag und zur Zerstäubung von Kraftstoff bzw. eines Kraftstoff-Gas-Gemisches in einen nicht dargestellten Zumeßraum eines nicht weiter dargestellten chemischen Reformers zur Gewinnung von Wasserstoff oder einer nicht weiter dargestellten Nachbrenneinrichtung zur Erzeugung von Wärme.

Die Dosiereinrichtung 1 besteht aus einer Zumeßeinrichtung 2, welche in diesem Ausführungsbeispiel als Niederdruck-Brennstoffeinspritzventil ausgeführt ist, einem Adapter 6 zur Aufnahme der Zumeßeinrichtung 2 und einer rohrförmigen, beispielsweise 10 bis 100 cm langen Zumeßleitung 8, einer Luftzuführung 9 und einem Düsenkörper 7. Die Zumeßeinrichtung 2 ist rohrförmig und weist an ihrer Oberseite einen Kraftstoffanschluß 13 auf. Seitlich weist die Zumeßeinrichtung 2 einen elektrischen Anschluß 5 auf. An der Unterseite der Zumeßeinrichtung 2 erfolgt die Zumessung von Kraftstoff oder eines Kraftstoff-Gas-Gemisches in die Zumeßleitung 8, wobei der Adapter 6 die Zumeßeinrichtung 2 und die Zumeßleitung 8 nach außen hydraulisch dicht miteinander verbindet. Die rohrförmige Luftzuführung 9 mündet in den Adapter 6 und steht so mit der Zumeßleitung 8 in Verbindung.

Das der Zumeßleitung 8 zugewandte hohlzylindrisch geformte Ende des Düsenkörpers 7 ist über ein hohlzylindrisch geformtes erstes Verbindungselement 10.1 mit der Zumeßleitung 8 hydraulisch dicht verbunden. Die Zumeßleitung 8 selbst besteht beispielsweise aus einem standardisierten, aus Edelstahl bestehenden, Metallrohr. In diesem Ausführungsbeispiel ist die Zumeßleitung 8 zweiteilig ausgeführt, wobei der dem Adapter 6 zugewandte Teil der Zumeßleitung 8 durch ein zweites Verbindungselement 10.2 mit dem dem Düsenkörper 7 zugewandten Teil der Zumeßleitung 8 verbunden ist.

Der untere Teil der Zumeßeinrichtung 2 greift in den Adapter 6 ein und ist durch ein Befestigungselement 3 in Form einer Klammer hydraulisch dicht mit dem Adapter 6 verbunden.

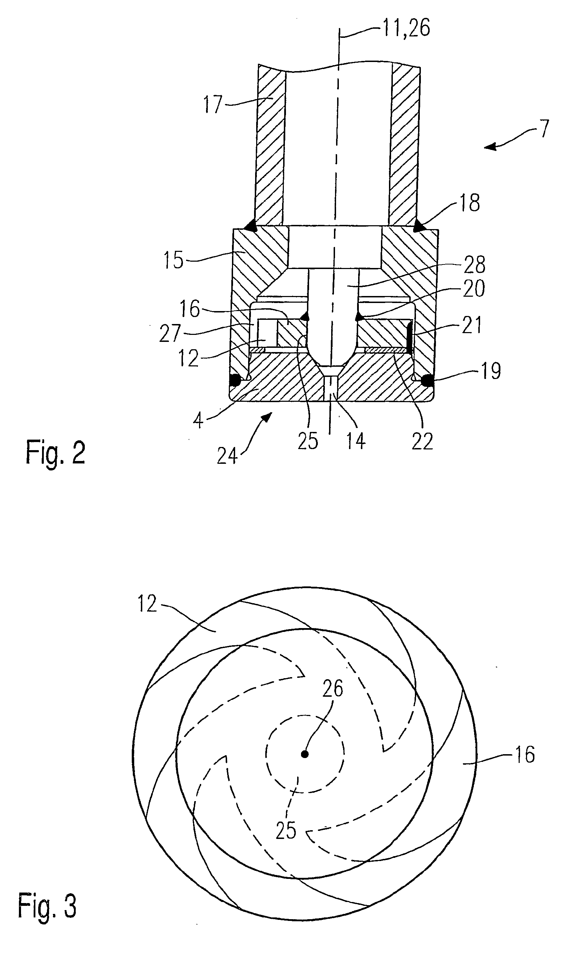

Der Düsenkörper 7 weist in seinem abspritzseitigen der Zumeßleitung 8 abgewandten Ende einen in Fig. 2 dargestellten Dralleinsatz 24 mit zumindest einer Abspritzöffnung 14 auf.

Der Zumeßeinrichtung 2 wird über den an der Oberseite der Zumeßeinrichtung 2 liegenden Kraftstoffanschluß 13 Kraftstoff, beispielsweise Benzin, Ethanol oder Methanol, von einer nicht dargestellten Kraftstoffpumpe und Kraftstoffleitung druckbehaftet zugeführt. Der Kraftstoff strömt bei Betrieb der Dosiereinrichtung 1 nach unten und wird durch den im unteren Ende der Zumeßeinrichtung 2 liegenden nicht dargestellten Dichtsitz in bekannter Weise durch Öffnen und Schließen des Dichtsitzes in die Zumeßleitung 8 eingemessen. Durch die über den Adapter 6 in die Zumeßleitung 8 mündende Luftzuführung 9 können zur Gemischaufbereitung Luft oder andere Gase, beispielsweise brennbare Restgase aus einem Reformierungs- oder Brennstoffzellenprozeß, zugeführt werden. Im weiteren Verlauf strömt der Kraftstoff bzw. das Kraftstoff-Gas-Gemisch durch die Zumeßleitung 8 zum Düsenkörper 7 und wird dort durch die in Fig. 2 dargestellte Abspritzöffnung 14 in den nicht dargestellten Zumeßraum drallbehaftet eindosiert.

Durch die Luftzuführung 9 kann außerdem Luft zur kontrollierten Entleerung der Zumeßleitung 8, beispielsweise kurz vor einer Leerlauf- oder Stopphase, zugeführt werden.

Durch die Zumeßleitung 8 wird die Zumeßeinrichtung 2, insbesondere der gegenüber hohen Temperaturen und großen Temperaturschwankungen empfindliche nicht dargestellte Dichtsitz der Zumeßeinrichtung 2, thermisch von den Temperaturen im nicht dargestellten Zumeßraum, welche beispielsweise 500 °C betragen, entkoppelt. Die Länge, das Material und die Form der Zumeßleitung 8 werden insbesondere entsprechend den thermischen und räumlichen Gegebenheiten gewählt. Vorzugsweise kann die Zumeßleitung 8 auch wandstärkereduzierte Stellen aufweisen, welche zur thermischen Isolierung beitragen oder als Kühlkörper wirken können.

Fig. 2 zeigt eine schematische Schnittdarstellung des Düsenkörpers 7 des ersten Ausführungsbeispiels. Der Düsenkörper 7 besteht aus einem Trägerelement 15, einem Zuführungsrohr 17 und dem stromabwärtig im Trägerelement 15 angeordneten Dralleinsatz 24. Alle drei genannten Bauteile 15, 17, 24 sind jeweils zylindrisch und an einer Düsenkörperlängsachse 11 des Düsenkörpers 7 konzentrisch ausgerichtet.

Das Zuführungsrohr 17, welches mit der in Fig. 1 gezeigten Zumeßleitung 8 durch das erste Verbindungselement 10.1 verbunden ist, ist an seinem stromabwärtigen Ende mit dem Trägerelement 15 durch eine erste Schweißnaht 18, welche durch Laserschweißen hergestellt ist, hydraulisch dicht gefügt. Die Fügeverbindung kann jedoch auch durch Pressen, Löten, Schweißen oder eine Schraubverbindung realisiert werden.

Der sich im unteren stromabwärtigen Ende des Trägerelements 15 befindende Dralleinsatz 24 umfaßt ein Sitzelement 4 mit der darin mittig angeordneten Abspritzöffnung 14 und ein Drallelement 16 mit Drallkanälen 12 und einer mittig angeordneten Öffnung 25. Das Sitzelement 4 und das Drallelement 16 sind jeweils scheibenförmig ausgebildet. Die stromabwärts zeigende Scheibenunterseite des Drallelements 16 und die stromaufwärts gerichtete Scheibenoberseite des Sitzelements 4 liegen über ein Zwischenelement 22 aufeinander auf und sind mit einer vierten Schweißnaht 21, welche mit einem Laserschweißverfahren hergestellt ist, aneinander gefügt. Das Zwischenelement 22 beabstandet das Sitzelement 4 und das Drallelement 16. Zwischen den Seiten des Drallelements 16, welche zur Wandung des Trägerelements 15 zeigen und den Wandungen des Trägerelements 15 befindet sich ein Abstand 27.

Eine Öffnungslängsachse 26 der Öffnung 25 deckt sich in diesem Ausführungsbeispiel mit der Düsenkörperlängsachse 11. Die Abspritzöffnung 14 im Sitzelement 4 ist zu beiden Achsen 26, 11 konzentrisch angeordnet. In diesem Ausführungsbeispiel greift ein stift- bzw. zylinderförmiger Einsatz 28 durch die Öffnung 25 des Drallelements 16 und verschließt dabei die Öffnung 25. Das stromabwärtige Ende des Einsatzes 28 liegt jedoch nicht auf dem Sitzelement 4 auf. In dieser Weise kann der Kraftstoff bzw. das Kraftstoff-Gas-Gemisch nur durch die im Drallelement 16 angeordneten Drallkanäle 12 zur stromabwärtig des Drallelements 16 gelegenen Abspritzöffnung 14 gelangen. Der Einsatz 28 ist entlang seines Außenumfangs an der Scheibenoberseite des Drallelements 16 durch eine dritte Schweißnaht 20 am Drallelement 16 hydraulisch dicht befestigt.

Der Dralleinsatz 24 ist am Sitzelement 4 durch eine zweite Schweißnaht 19, welche durch ein Laserschweißverfahren hergestellt ist, am Trägerelement 15 hydraulisch dicht befestigt, wobei die zweite Schweißnaht 19 etwa am Außenumfang des Sitzelements 4 verläuft.

Fig. 3 zeigt eine schematische Darstellung eines Drallelements 16 des ersten Ausführungsbeispiels von einem stromaufwärtigen auf der Öffnungslängsachse 26 liegenden Punkt. Die vier Drallkanäle 12 verlaufen in dem scheiben-und kreisscheibenförmigen Drallelement 16 mit einem radialen und tangentialen Richtungsanteil zur Öffnungslängsachse 26 der Öffnung 25. Der Kraftstoff bzw. das Kraftstoff-Gas-Gemisch tritt dabei an der stromaufwärtigen Scheibenoberseite des Drallelements 16 nahe des Außenumfangs des Drallelements 16 und an den Seiten des Drallelements 16 in die Drallkanäle 12 ein. Der Kraftstoff bzw. das Kraftstoff-Gas-Gemisch wird dann innerhalb des Drallelements 16 durch die Drallkanäle 12 zur mittig gelegenen Öffnung 25 geleitet, wo der Kraftstoff an der Scheibenunterseite des Drallelements 16 nahe der Öffnung 25 drallbehaftet austritt und zur in Fig. 2 gezeigten Abspritzöffnung 14 strömt.

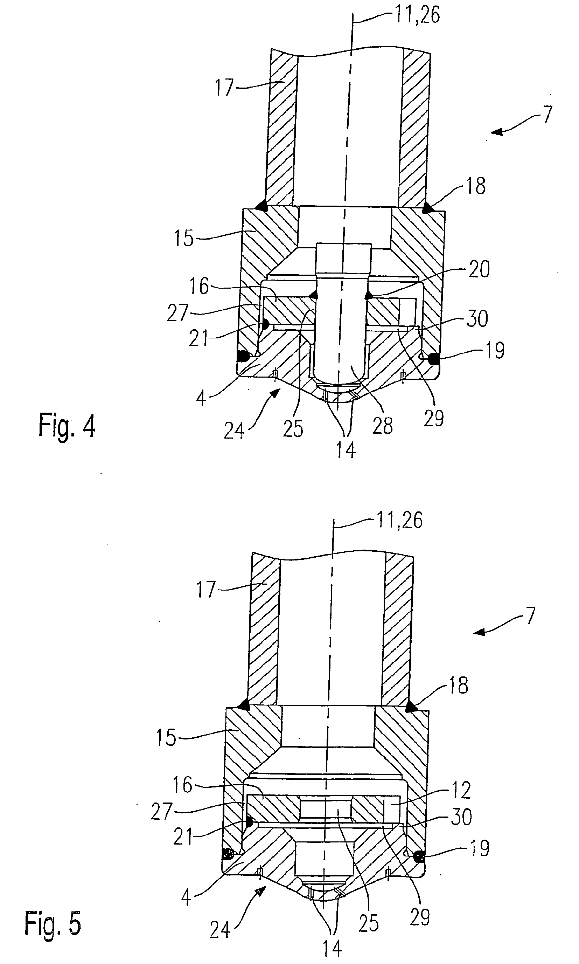

Fig. 4 zeigt eine schematische Schnittdarstellung des Düsenkörpers 7 erfindungsgemäßen Dosiereinrichtung 1, ähnlich der des ersten Ausführungsbeispiels aus Fig. 2. Im Unterschied zum Ausführungsbeispiel aus Fig. 2 fehlt im wesentlichen jedoch das Zwischenelement 22. Außerdem weist das zum Dralleinsatz 24 gehörende Sitzelement 4 mehrere Abspritzöffnungen 14 mit unterschiedlichen Neigungswinkeln auf.

Das zum Beabstanden von Drallelement 16 und Sitzelement 4 verwendete Zwischenelement 22 ist durch eine mittig in der stromaufwärtigen Scheibenoberseite des Sitzelements 4 angeordnete Ausnehmung 29 ersetzt, wobei das Drallelement 16 auf dem dabei auf der Scheibenoberseite des Sitzelements 4 entstandenen Ring 30 aufliegt.

Fig. 5 zeigt eine schematische Schnittdarstellung des Düsenkörpers 7 eines dritten Ausführungsbeispiels der erfindungsgemäßen Dosiereinrichtung 1, wobei dieses Ausführungsbeispiel der erfindungsgemäßen Dosiereinrichtung gemäß Fig. 4 sehr ähnelt. Im Unterschied zu Fig. 4 fehlt jedoch der Einsatz 28. Der Kraftstoff bzw. das Kraftstoff-Gas-Gemisch kann in dieser Weise durch die Öffnung 25 und durch die Drallkanäle 12 zu den Abspritzöffnungen 14 strömen.

## Patentansprüche

1. Dosiereinrichtung (1) für flüssige Kraftstoffe, insbesondere zum Eintrag in einen chemischen Reformer zur Gewinnung von Wasserstoff oder in eine Nachbrenneinrichtung zur Erzeugung von Wärme, mit zumindest einer Zumesseinrichtung (2) zum Zumessen von Kraftstoff in eine Zumessleitung (8) und mit einem sich an die Zumessleitung (8) anschließenden Düsenkörper (7) der zumindest eine Abspritzöffnung (14) aufweist, die in einen Zumessraum ausmündet, wobei der Düsenkörper (7) stromabwärtig ein Trägerelement (15) mit einem abspritzseitig angeordneten Dralleinsatz (24) aufweist, in welchem die zumindest eine Abspritzöffnung (14) angeordnet ist, und welcher ein scheibenförmig ausgebildetes Sitzelement (4) und ein stromaufwärts des Sitzelements (4) angeordnetes Drallelement (16) umfasst,
**dadurch gekennzeichnet,**
**dass** in der stromaufwärtigen Scheibenoberseite des Sitzelements (4) eine Ausnehmung (29) vorgesehen ist, wobei das Drallelement (16) auf dem dabei auf der Scheibenoberseite des Sitzelements (4) entstandenen Ring (30) aufliegt, so dass das Sitzelement (4) und das Drallelement (16) voneinander beabstandet sind.

2. Dosiereinrichtung nach Anspruch 1,
**dadurch gekennzeichnet,**
**dass** der Düsenkörper (7) stromaufwärtig des Trägerelements (15) ein rohrförmiges, insbesondere zylinderrohrförmiges Zuführungsrohr (17) aufweist, welches stromabwärtig mit dem rohrförmigen, insbesondere zylinderrohrförmigen, Trägerelement (15) hydraulisch dicht verschweißt, insbesondere laserverschweißt, ist.

3. Dosiereinrichtung nach Anspruch 1 oder 2,
**dadurch gekennzeichnet,**
**dass** der Dralleinsatz (16) mit dem Trägerelement (15) insbesondere durch Pressen oder Schweißen, insbesondere Laserschweißen, hydraulisch dicht gefügt ist.

4. Dosiereinrichtung nach einem der Ansprüche 1 bis 3,
**dadurch gekennzeichnet,**
**dass** das Drallelement (16) eine durchgängige Öffnung (25) aufweist.

5. Dosiereinrichtung nach Anspruch 4,
**dadurch gekennzeichnet,**
**dass** die Öffnung (25) wenigstens teilweise durch einen Einsatz (28) verschlossen ist.

6. Dosiereinrichtung nach Anspruch 5,
**dadurch gekennzeichnet,**
**dass** der Einsatz (28) mit dem Drallelement (16) durch Schweißen, insbesondere Laserschweißen, verbunden ist.

7. Dosiereinrichtung nach einem der Ansprüche 4 bis 6,
**dadurch gekennzeichnet,**
**dass** die Öffnung (25) eine Öffnungslängsachse (26) aufweist, welche einen in Strömungsrichtung zeigenden Richtungsanteil hat.

8. Dosiereinrichtung nach Anspruch 7,
**dadurch gekennzeichnet,**
**dass** das Drallelement (16) zumindest einen Drallkanal (12) aufweist, welcher zur Öffnungslängsachse (26) liegende radialen und tangentialen Richtungsanteile aufweist.

9. Dosiereinrichtung nach einem der Ansprüche 1 bis 8,
**dadurch gekennzeichnet,**
**dass** das Drallelement (16) durch Schweißen, insbesondere Laserschweißen, mit dem Sitzelement (4) verbunden ist.

10. Dosiereinrichtung nach einem der Ansprüche 1 bis 9,
**dadurch gekennzeichnet,**
**dass** zwischen Drallelement (16) und Sitzelement (4) ein Zwischenelement (22) angeordnet ist.

11. Dosiereinrichtung nach einem der Ansprüche 1 bis 10,
**dadurch gekennzeichnet,**
**dass** das Drallelement (16) von der Wandung des Trägerelements (15) mit einem Abstand (27) beabstandet ist.

12. Dosiereinrichtung nach einem der vorangegangenen Ansprüche,
**dadurch gekennzeichnet,**
**dass** die Zumessleitung (8) und die Zumesseinrichtung (2) durch einen Adapter (6) hydraulisch dicht und lösbar gefügt sind.

13. Dosiereinrichtung nach Anspruch 12,
**dadurch gekennzeichnet,**
**dass** der Adapter (6) eine Luftzuführung (9) aufweist, die im Adapter (6) mit der Zumessleitung (8) in Verbindung steht.

14. Dosiereinrichtung nach einem der vorangegangenen Ansprüche,
**dadurch gekennzeichnet,**
**dass** die Zumesseinrichtung (2) ein Brennstoffeinspritzventil ist.

15. Dosiereinrichtung nach Anspruch 14,
**dadurch gekennzeichnet,**
**dass** das Brennstoffeinspritzventil ein Niederdruck-Brennstoffeinspritzventil ist, welches mit Brenn- bzw. Kraftstoffdrücken von bis zu 10 bar arbeitet.

16. Dosiereinrichtung nach einem der vorangegangenen Ansprüche,
**dadurch gekennzeichnet,**
**dass** die Zumessleitung (8) in ihrem axialen Verlauf zumindest eine wandstärkereduzierte Stelle oder einen wandstärkereduzierten Bereich aufweist.

## Claims

1. Dosing device (1) for liquid fuels, in particular for introducing into a chemical reformer for the recovery of hydrogen or into a post-combustion device for generating heat, having at least one metering device (2) for metering fuel into a metering line (8) and having a nozzle body (7) which adjoins the metering line (8) and has at least one ejection opening (14) which opens out into a metering space, with the nozzle body (7) having, downstream, a support element (15) with a swirl insert (24) which is arranged at the ejection side, in which swirl insert (24) the at least one ejection opening (14) is arranged, and which swirl insert (24) comprises a disc-shaped seat element (4) and a swirl element (16) which is arranged upstream of the seat element (4),
**characterized**
**in that** a recess (29) is provided in the upstream disc upper side of the seat element (4), with the swirl element (16) resting against the ring (30) which is generated here on the disc upper side of the seat element (4), in such a way that the seat element (4) and the swirl element (16) are spaced apart from one another.

2. Dosing device according to Claim 1,
**characterized**
**in that** the nozzle body (7) has, upstream of the support element (15), a tubular, in particular cylindrical-tube-shaped inlet tube (17) which, downstream, is welded, in particular laser-welded, in a hydraulically sealed manner to the tubular, in particular cylindrical-tube-shaped support element (15).

3. Dosing device according to Claim 1 or 2,
**characterized**
**in that** the swirl insert (16) is joined in a hydraulically sealed manner to the support element (15) in particular by means of pressing or welding, in particular laser welding.

4. Dosing device according to one of Claims 1 to 3,
**characterized**
**in that** the swirl element (16) has a continuous opening (25).

5. Dosing device according to Claim 4,
**characterized**
**in that** the opening (25) is at least partially closed off by means of an insert (28).

6. Dosing device according to Claim 5,
**characterized**
**in that** the insert (28) is connected to the swirl element (16) by means of welding, in particular laser welding.

7. Dosing device according to one of Claims 4 to 6,
**characterized**
**in that** the opening (25) has an opening longitudinal axis (26) which has a directional component pointing in the flow direction.

8. Dosing device according to Claim 7,
**characterized**
**in that** the swirl element (16) has at least one swirl duct (12) which has directional components running radially and tangentially with respect to the opening longitudinal axis (26).

9. Dosing device according to one of Claims 1 to 8,
**characterized**
**in that** the swirl element (16) is connected to the seat element (4) by means of welding, in particular laser welding.

10. Dosing device according to one of Claims 1 to 9,
**characterized**
**in that** an intermediate element (22) is arranged between the swirl element (16) and seat element (4).

11. Dosing device according to one of Claims 1 to 10,
**characterized**
**in that** the swirl element (16) is spaced apart from the wall of the support element (15) with a spacing (27).

12. Dosing device according to one of the preceding claims,
**characterized**
**in that** the metering line (8) and the metering device (2) are joined in a hydraulically sealed and detachable manner by means of an adapter (6).

13. Dosing device according to Claim 12,
**characterized**
**in that** the adapter (6) has an air inlet (9) which is connected in the adapter (6) to the metering line (8).

14. Dosing device according to one of the preceding claims,
**characterized**
**in that** the metering device (2) is a fuel injection valve.

15. Dosing device according to Claim 14,
**characterized**
**in that** the fuel injection valve is a low-pressure fuel injection valve which operates with combustion pressures or fuel pressures of up to 10 bar.

16. Dosing device according to one of the preceding claims,
**characterized**
**in that** the metering line (8) has, in its axial profile, at least one point of reduced wall thickness or a region of reduced wall thickness.

## Revendications

1. Dispositif de dosage (1) pour des carburants liquides, en particulier pour l'introduction dans un reformeur chimique pour obtenir de l'hydrogène ou dans un dispositif de post-combustion pour produire de la chaleur, comprenant au moins un dispositif de dosage (2) pour doser du carburant dans une conduite de dosage (8) et un corps de buse (7) se raccordant à la conduite de dosage (8) de l'au moins une ouverture de pulvérisation (14), qui débouche dans un espace de dosage, le corps de buse (7) présentant en aval un élément de support (15) avec un insert de rotation (24) disposé du côté de la pulvérisation, dans lequel est disposée l'au moins une ouverture de pulvérisation (14), et qui comprend un élément de siège (4) réalisé en forme de disque et un élément de rotation (16) disposé en amont de l'élément de siège (4),
**caractérisé en ce que**
dans le côté supérieur amont du disque de l'élément de siège (4) est prévu un évidement (29), l'élément de rotation (16) reposant sur la bague (30) produite ainsi sur le côté supérieur du disque de l'élément de siège (4), de sorte que l'élément de siège (4) et l'élément de rotation (16) sont espacés l'un de l'autre.

2. Dispositif de dosage selon la revendication 1,
**caractérisé en ce que**
le corps de buse (7) présente, en amont de l'élément de support (15), un tube d'alimentation (17) de forme tubulaire, notamment tubulaire cylindrique, qui est soudé hermétiquement hydrauliquement en aval à l'élément de support (15) de forme tubulaire, notamment tubulaire cylindrique, notamment par soudage au laser.

3. Dispositif de dosage selon la revendication 1 ou 2,
**caractérisé en ce que**
l'insert de rotation (16) est assemblé hermétiquement hydrauliquement à l'élément de support (15), en particulier par pressage ou soudage, en particulier par soudage au laser.

4. Dispositif de dosage selon l'une quelconque des revendications 1 à 3,
**caractérisé en ce que**
l'élément de rotation (16) présente une ouverture continue (25).

5. Dispositif de dosage selon la revendication 4,
**caractérisé en ce que**
l'ouverture (25) est fermée au moins en partie par un insert (28).

6. Dispositif de dosage selon la revendication 5,
**caractérisé en ce que**
l'insert (28) est connecté à l'élément de rotation (16) par soudage, notamment soudage au laser.

7. Dispositif de dosage selon l'une quelconque des revendications 4 à 6,
**caractérisé en ce que**
l'ouverture (25) présente un axe longitudinal d'ouverture (26) qui présente une composante directionnelle dans la direction de l'écoulement.

8. Dispositif de dosage selon la revendication 7,
**caractérisé en ce que**
l'élément de rotation (16) présente au moins un canal de rotation (12), qui présente des composantes directionnelles radiales et tangentielles par rapport à l'axe longitudinal d'ouverture (26).

9. Dispositif de dosage selon l'une quelconque des revendications 1 à 8,
**caractérisé en ce que**
l'élément de rotation (16) est connecté à l'élément de siège (4) par soudage, en particulier par soudage au laser.

10. Dispositif de dosage selon l'une quelconque des revendications 1 à 9,
**caractérisé en ce**
**qu'**un élément intermédiaire (22) est disposé entre l'élément de rotation (16) et l'élément de siège (4) .

11. Dispositif de dosage selon l'une quelconque des revendications 1 à 10,
**caractérisé en ce que**
l'élément de rotation (16) est espacé de la paroi de l'élément de support (15) par une distance (27).

12. Dispositif de dosage selon l'une quelconque des revendications précédentes,
**caractérisé en ce que**
la conduite de dosage (8) et le dispositif de dosage (2) sont assemblés hermétiquement hydrauliquement et de manière détachable par un adaptateur (6).

13. Dispositif de dosage selon la revendication 12,
**caractérisé en ce que**
l'adaptateur (6) présente une amenée d'air (9) qui est en liaison avec la conduite de dosage (8) dans l'adaptateur (6).

14. Dispositif de dosage selon l'une quelconque des revendications précédentes,
**caractérisé en ce que**
le dispositif de dosage (2) est une soupape d'injection de carburant.

15. Dispositif de dosage selon la revendication 14,
**caractérisé en ce que**
la soupape d'injection de carburant est une soupape d'injection de carburant basse pression, qui fonctionne à des pressions de carburant ou de combustible allant jusqu'à 10 bars.

16. Dispositif de dosage selon l'une quelconque des revendications précédentes,
**caractérisé en ce que**
la conduite de dosage (8) présente, dans son étendue axiale, au moins un emplacement à épaisseur de paroi réduite ou une région d'épaisseur de paroi réduite.
